(19) Europäisches Patentamt
European Patent Office
Office européen des brevets

(11) EP 4 671 306 A1

(12) **EUROPEAN PATENT APPLICATION**

(43) Date of publication:
**31.12.2025 Bulletin 2026/01**

(21) Application number: **25185997.1**

(22) Date of filing: **27.06.2025**

(51) International Patent Classification (IPC):
***C08G 71/02*** (2006.01) ***C07D 317/36*** (2006.01)
***C07D 317/38*** (2006.01) ***C08G 71/04*** (2006.01)
***C08L 75/02*** (2006.01) ***C08L 75/04*** (2006.01)
***C08L 75/06*** (2006.01) ***C08L 75/08*** (2006.01)
***D01F 6/70*** (2006.01) ***D04H 1/4358*** (2012.01)

(52) Cooperative Patent Classification (CPC):
**C08G 71/02; C08G 71/04; C08L 75/02; C08L 75/04; C08L 75/06; C08L 75/08; D01F 6/70;** D04H 1/4358

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **28.06.2024 US 202463665254 P**
**28.06.2024 US 202418758594**

(71) Applicant: **Far Eastern New Century Corporation**
**Taipei (TW)**

(72) Inventors:
- **HUNG, Wei-Che**
**330 Taoyuan City (TW)**
- **WANG, Cheng-Ting**
**330 Taoyuan City (TW)**

(74) Representative: **D Young & Co LLP**
**3 Noble Street**
**London EC2V 7BQ (GB)**

(54) **CONDENSATION TYPE POLYURETHANE FIBER**

(57) The present invention provides a condensation type polyurethane fiber. The condensation type polyurethane fiber includes a condensation type polyurethane, the condensation type polyurethane includes a plurality of first segments having

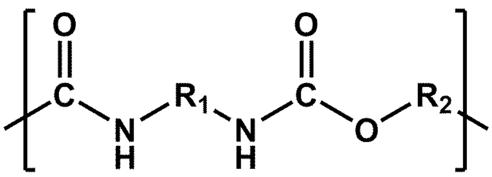

,

a plurality of terminal group having

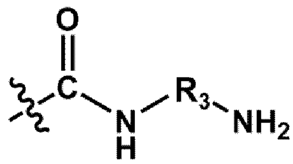

,

which is bonded to $R_2$ of at least one of the first segments. $R_1$ and $R_3$ independently include a first organyl group of C2-C20. The first segments have the same or different $R_2$. $R_2$ includes a second organyl group of C2-C20. The amine value of the condensation type polyurethane is at least 10 meq/kg. The coefficient of variation of the condensation type polyurethane fibers is less than 6.

EP 4 671 306 A1

## Description

### BACKGROUND

The present invention relates to a condensation type polyurethane fiber. More particularly, the present invention relates to a non-isocyanate polyurethane fiber.

Description of Related Art

Spandex fiber is widely used in sportswear, such as yoga apparel. A raw material for preparing spandex fiber is polyurethane polyurea, such as Patent No. TW200412352, US6916896B2, and US20250129522A1, and its structure has a higher content of urea bonds (>40 mol%) and strong hydrogen bonding force. Therefore, solvent spinning must be used when preparing the fiber, and the waste solvent must be processed later. The industry hopes to switch to a green process of melt spinning. The common raw material of the melt spinning is thermoplastic polyurethane, for example, US10875956B2, which mainly uses isocyanate and polyol as raw materials. The isocyanate is toxic. Therefore, the non-isocyanate polyurethane (NIPU) process has become a green process that the industry is striving to pursue.

The green process of the non-isocyanate polyurethane (NIPU) is divided into two types: polyaddition and condensation type. The structures of the products of the above two processes are different.

The polyaddition process, for example, US20230183423A1 uses a compound containing a plurality of cyclic carbonate groups and polyamine to prepare PU by polyaddition, and the synthesized PU has an OH functional group on its' side chain. Therefore, it is called polyhydroxyurethane (PHU, as shown in the following structure):

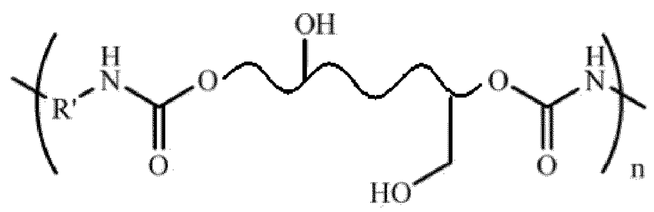

.

Another green process that is more environmentally friendly is the condensation type. The commonly used starting reactant is reacting carbonate(s) and diamine(s), and then an ester exchange reaction with polyol(s) to obtain a condensation type NIPU. The condensation type NIPU synthesized by condensation type does not have a side chain of OH functional group. The structure of the condensation type NIPU product is different from that of the polyaddition product PHU. For example, CN101696271A, CN103865059A, CN116355210A, CN112853531A, and CN104513393B disclose the use of carbonate and diamine to prepare a diaminoester diol monomer (a dicarbamate), and then the diaminoester diol monomer polymerize with polyol(s) to obtain NIPU suitable for direct melt processing. However, in the process of preparing the diaminoester diol monomer, organic solvents need to be used for recrystallization purification, so a large amount of waste liquid is generated, the process is energy-consuming and environmentally unfriendly.

As mentioned above, although there is a green and environmentally friendly process for preparing NIPU, the industry is more eager to process green and environmentally friendly NIPU into fibers. It is worth noting that due to the linear molecular structure of the condensation type NIPU, the molecular entanglement is insufficient (poor cohesion), which leads to easy breakage of the yarn or poor yarn uniformity during the spinning process, and thus affecting the physical properties of the fiber. For example, CN112853531A discloses a non-isocyanate method for preparing aliphatic polyurethane. This technology uses a chain extender to increase the molecular weight of NIPU so that NIPU can be spun smoothly. However, in addition to considering the molecular weight during the spinning process, it is also necessary to consider the effect of molecular cohesion on the die swell ratio during high-temperature melt spinning. Simply increasing the molecular weight cannot effectively control the die swell ratio, and broken yarns still occur during the spinning process.

### SUMMARY

Therefore, the purpose of the present invention is to provide a condensation type polyurethane fiber which can overcome the above disadvantages of the prior arts.

The present invention provides a condensation type polyurethane fiber including a condensation type polyurethane resin, and the condensation type polyurethane resin includes a plurality of first segments having a structure as shown in formula (1):

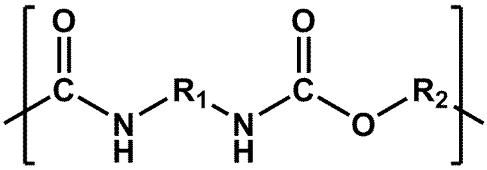

formula (1)

and a plurality of terminal groups bonded to $R_2$ of at least one of the first segments, and the terminal groups having a structure as shown in formula (2):

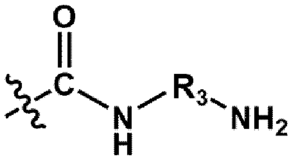

formula (2),

in which $R_1$ and $R_3$ independently include a first organyl group of C2-C20, and the first organyl group includes a hydrocarbon group or a group having carbon, hydrogen, and oxygen, in which the condensation type polyurethane resin has an amine value not less than 10 meq/kg, and a coefficient of variation (CV value) of the condensation type polyurethane fiber is not greater than 6.

The effects of the present invention: the condensation type polyurethane resin proposed in this case can be used to make the condensation type polyurethane fiber smoothly undergo a melt spinning process without adding the chain extender, and the condensation type polyurethane fiber with good fiber uniformity can be obtained.

## DETAILED DESCRIPTION

The present invention will be described in detail below.

A condensation type polyurethane fiber of the present invention includes a condensation type polyurethane resin, and the condensation type polyurethane resin includes a plurality of first segments having a structure as shown in formula (1):

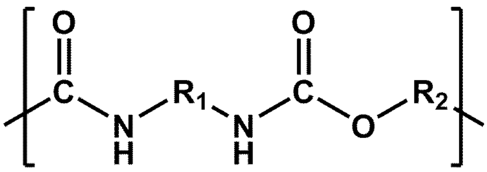

formula (1)

and a plurality of terminal groups bonded to $R_2$ of at least one of the first segments, and the terminal groups having a structure as shown in formula (2):

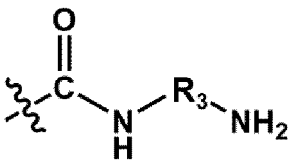

formula (2),

in which $R_1$ and $R_3$ independently include a first organyl group of C2-C20, and the first organyl group includes a hydrocarbon group or a group having carbon, hydrogen, and oxygen. The first segments have the same or different $R_2$, and $R_2$ independently includes a second organyl group of C2-C20, the second organyl group includes a hydrocarbon group or a group having carbon, hydrogen, and oxygen. The condensation type polyurethane resin has an amine value not less than 10 meq/kg, and a coefficient of variation (CV value) of the condensation type polyurethane fiber is not greater than 6.

Preferably, the hydrocarbon group refers to a group composed of carbon and hydrogen atoms, and the hydrocarbon group may be an alkyl group, an alkenyl group, an alkynyl group, an aryl group, or the like.

Preferably, $R_1$ and $R_3$ independently include a cyclic hydrocarbon group, a non-cyclic hydrocarbon group, or a combination thereof. The cyclic hydrocarbon group may be an alicyclic hydrocarbon group, an aromatic hydrocarbon

group, or a combination thereof. More preferably, $R_1$ and $R_3$ independently include

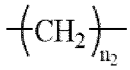 , 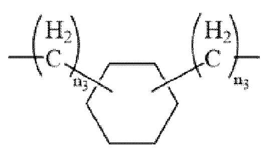 , 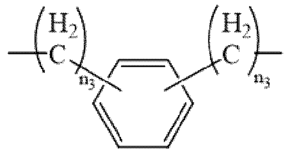 ,

or combinations thereof, in which each $n_2$ is 2-10, and each $n_3$ is 1-10.

Preferably, $R_2$ includes

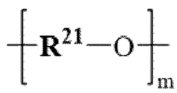 , 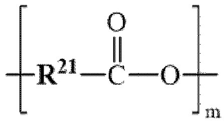 ,

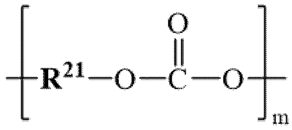 , 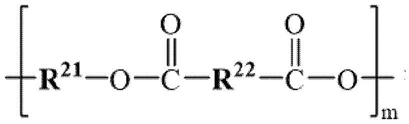 ,

or combinations thereof, in which $R^{21}$ and $R^{22}$ are each a C2 to C20 hydrocarbon group, and each m is 1-250.

Preferably, $R_2$ is selected from

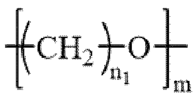 , 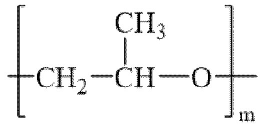 ,

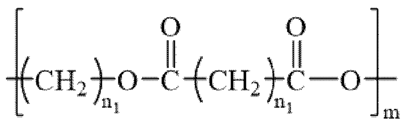 , 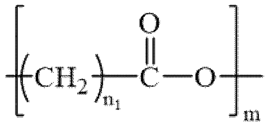 , 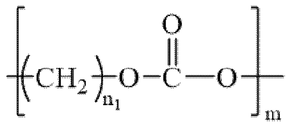 ,

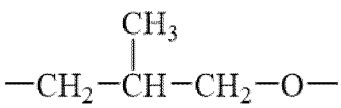 , 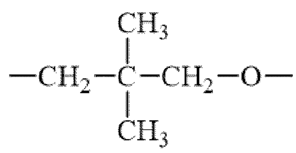

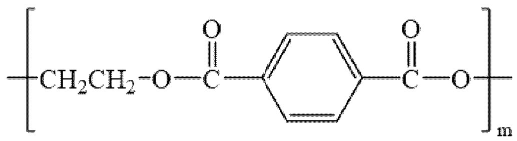 ,

or combinations thereof, in which each $n_1$ is 2-20, each m is 1-250. More preferably, each m is 2-100.

Preferably, an amine value of the condensation type polyurethane fiber ranges from 10 meq/kg to 45 meq/kg.

Preferably, the condensation type polyurethane resin further includes an urea bond group-containing compound.

Preferably, when an amount of the condensation type polyurethane resin is 100 mol%, a content of the urea bond group-containing compound is not greater than 30 mol%. More preferably, the content of the urea bond group-containing compound is 6 mol% to 30 mol%.

Preferably, a number average molecular weight (Mn) of the condensation type polyurethane resin ranges from 1,000-300,000. More preferably, 10,000-200,000. Most preferably, 20,000 to 150,000.

The condensation type polyurethane resin of the present invention as described above can be prepared by using the following method, for example, a diamine compound as shown in formula 3 and a carbonate compound are performing a carbamation reaction to form a carbamate mixture, in which the carbamate mixture includes an amine hydrocarbon carbamate (an amino carbamate) and a hydrocarbon dicarbamate diester (a dicarbamate), and the carbamate mixture is further subjected to an carbamation reaction with a diol compound as shown in formula 4 to form the condensation type polyurethane resin.

Formula 3 $H_2N\text{-}R1\text{-}NH_2$

Formula 4 HO-R2-H

In the formula 3 and the formula 4, R1 is C2-C20 hydrocarbon group.

Preferably, R1 is selected from

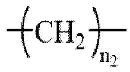 , 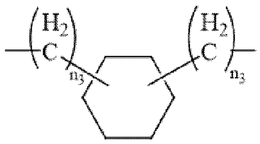 ,

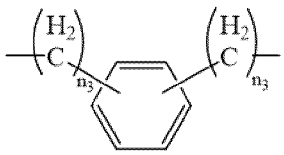 ,

or combinations thereof, in which each $n_2$ is 2-10, and each $n_3$ is1-10.

Preferably, R2 is selected from

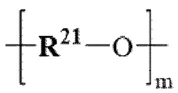 , 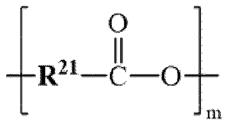 ,

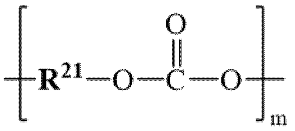 , 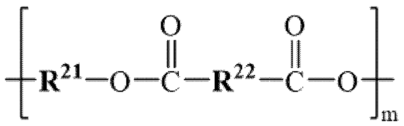 ,

or combinations thereof, in which $R^{21}$ and $R^{22}$ are each a C2 to C20 hydrocarbon group, and each m is 1-250.

Preferably, R2 is selected from

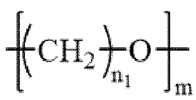 , 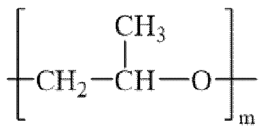 ,

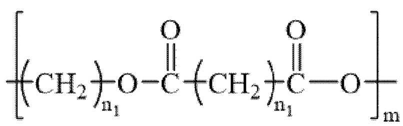 , 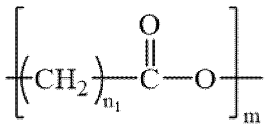 , 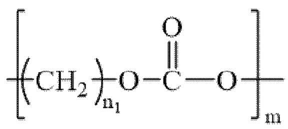 ,

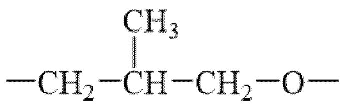

,

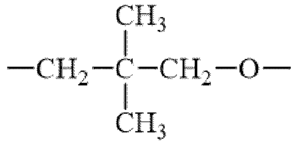

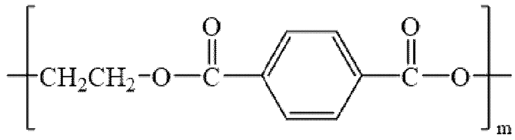

,

or combinations thereof, in which each $n_1$ is 2-20, each m is 1-250. More preferably, each m is 2-100.

Preferably, a temperature of the carbamation reaction ranges from 30 °C to 120 °C, and a temperature of the carbamation reaction ranges from 100 °C to 200 °C.

Preferably, a pressure of the carbamation reaction is about 760 torr, and a pressure of the carbamation reaction is not greater than 30 torr.

Preferably, a molar ratio of the diamine compound to the carbonate compound is 1:2 to 1:10, and a molar ratio of the hydrocarbon dicarbamate diester in the carbamate mixture to the diol compound is 1:0.01 to 1:2. More preferably, 1:0.2 to 1:1.

Preferably, the diamine compound is selected from cyclic diamine, non-cyclic diamine, or a combination thereof. Optionally, the diamine compound is selected from pentanediamine, hexamethylenediamine, 1,10-diaminodecane, m-phenylenediamine, 1,3-bis(aminomethyl)cyclohexane, or mixtures thereof.

Preferably, the diol compound is selected from cyclic diol, non-cyclic diol, or a combination thereof. More preferably, the diol compound is selected from ether diol (such as polyalkylene glycol), ester diol (such as polyester diol), carbonate diol (such as polycarbonate diol), or alkylene diol. Optionally, the diol compound is selected from polyethylene glycol (PEG), polytetramethylene ether glycol (PTMEG), polypropylene glycol (PPG), PPG-co-PEG, polybutylene adipate (PBA), poly(1,6-hexamethylene adipate) (PHA), poly(ethylene adipate) (PEA), poly(butylene succinate) (PBS), poly-ε-caprolactone (PCL), an oligomer of bis-2-hydroxyethyl terephthalate (BHET), poly(hexamethylene carbonate) diol (PHC diol), polyethylene carbonate (PEC), polypropylene carbonate (PPC), ethylene glycol (EG), propylene glycol (PG), butanediol (BDO), neopentyl glycol (NPG), 2-methyl-1,3-propanediol (MPDO), diethylene glycol (DEG), triethylene glycol (TEG), bis-2-hydroxyethyl terephthalate (BHET), 1,4-cyclohexanedimethanol, isosorbide (ISOS), 2,2,4,4-tetramethyl-1,3-cyclobutanediol (TMCD), or mixtures thereof.

Preferably, a number average molecular weight (Mn) of the diol compound ranges from 60-10,000. More preferably, the Mn of the diol compound ranges from 60-6,000.

Preferably, the diol compound is selected from combinations of at least two diols mentioned above.

Preferably, a source of the carbonate compound is selected from a biomass source, a petroleum source, a recycled source, or a carbon dioxide source.

Preferably, the carbonate compound is obtained by reacting carbon dioxide with an epoxy compound.

Preferably, the carbonate compound is obtained by reacting the carbon dioxide, the epoxy compound, and the diol.

Preferably, the carbonate compound is selected from cyclic carbonate, non-cyclic carbonate, polycarbonate, or mixtures thereof.

Optionally, the cyclic carbonate is selected from ethylene carbonate (EC), propylene carbonate (PC), butylene carbonate, or mixtures thereof.

Optionally, the non-cyclic carbonate is selected from dimethyl carbonate (DMC), diethyl carbonate (DEC), diphenyl carbonate (DPC), substituted non-cyclic carbonate, or mixtures thereof. The substituted non-cyclic carbonate may be di(diethylene glycol) carbonate (DEGC).

Optionally, the polycarbonate is selected from polycarbonate diol, poly(ethylene carbonate) (PEC), poly(propylene carbonate) (PPC), or mixtures thereof.

Preferably, an amine value of the carbamate mixture is not less than 10 meq/kg. More preferably, the amine value of the carbamate mixture ranges from 10 meq/kg to 100 meq/kg.

Preferably, the carbonate compound is ethylene carbonate, and the carbamate mixture includes di(2-hydroxyethyl) hydrocarbylenedicarbamate (a dicarbamate) and 2-hydroxyethyl (aminohydrocarbyl) carbamate (an amino carbamate).

Preferably, the carbonate compound is dimethyl carbonate, and the carbamate mixture includes methyl (aminohydrocarbyl) carbamate (an amino carbamate) and dimethyl hydrocarbylenedicarbamate (a dicarbamate).

Preferably, the carbamate mixture does not include purification before the carbamation reaction. Preferably, the

carbamate mixture does not include recrystallization before the carbamation reaction.

Preferably, the preparation method can carry out the carbamation reaction in the presence of a catalyst to form the condensation type polyurethane resin. Preferably, the catalysis selected from dibutyltin oxide, tin oxide, stannous chloride, zinc oxide, zinc acetate, zinc chloride, aluminum acetate, magnesium acetate, aluminum chloride, tetrabutyl titanate, tetraisopropyl titanate, or mixtures thereof. More preferably, a weight ratio of the catalyst is in a range of 0.0001 wt% to 1 wt% based on a total weight of the carbamate mixture, the diol compound, and the catalyst being 100 wt %.

The condensation type polyurethane resin of the present invention can be spun using a conventional melt spinning process (without using an additional solvent). For example, the polyurethane resin is melt-extruded through a screw extruder, and then accurately metered by a metering pump, input into a spinning element, and ejected through a spinneret hole to form a filament tow. The filament tow is then cooled, bundled, stretched, and then wound to obtain the condensation type polyurethane elastic fiber.

Preferably, the melt temperature of the screw extruder is 130 °C to 150 °C, and the spinning speed is 50 m/min to 2000 m/min.

Preferably, the die swell ratio of the spinneret hole is 1.1-1.7, more preferably, 1.2-1.5.

The condensation type polyurethane fiber of the present invention is not limited in form, such as monofilament, multifilament, staple fiber, elastic fiber, sheath-core fiber, side-by-side fiber, and sea-island fiber.

Preferably, a number of a denier of the condensation type polyurethane elastic fiber of the present invention is 1 denier to 200 deniers.

Preferably, the coefficient of variation (CV value) of the condensation type polyurethane fiber is not greater than 6, more preferably, 2-6.

The condensation type polyurethane fiber of the present invention can be further applied to the production of various fabrics, such as woven fabrics, knitted fabrics, non-woven fabrics, etc. It can also be applied to the production of sportswear, such as yoga apparel.

The present invention will be further described with reference to the following examples. However, it should be understood that these examples are only for illustration purposes and should not be construed as limiting the implementation of the present invention.

**[Condensation type polyurethane resin]**

**<Example 1 (E1)>**

In a 1 L stainless steel reactor, 1,6-hexanediamine (HMDA, purchased from Huafon Chemical Co., Ltd) as a diamine compound, ethylene carbonate (EC, purchased from Oriental Union Chemical Corporation) as a carbonate compound, and polyethylene glycol 1000 (PEG1000, purchased from Oriental Union Chemical Corporation) as a diol compound were mixed in a molar ratio of 1:2.1:0.26, and the carbamation reaction was carried out at 75 °C with stirring for 5 h to obtain the carbamate mixture of example 1. The carbamate mixture of example 1 includes 2-hydroxyethyl (aminohexyl)carbamate, bis(2-hydroxyethyl) hexane-1,6-diyldicarbamate, and PEG1000, and the amine value of the carbamate mixture of E1 measured by ASTM D2074 was 61.6 meq/kg.

$SnCl_2$ as a catalyst was added to the above reactor, and a carbamation reaction was carried out at 180 °C and a pressure of less than 30 torr for 1 h. The pressure was then reduced to 3 torr until the viscosity of the product no longer increased, thereby obtaining the condensation type polyurethane resin of example 1, whose number average molecular weight (Mn) was 48,000.

**<Example 2 (E2)>**

The preparation of the condensation type polyurethane resin of example 2 is similar to that of example 1, except that PEG1000 is replaced with poly(tetramethylene ether) glycol 1000 (PTMEG1000, purchased from Formosa Asahi Spandex Co., Ltd). HMDA, EC, and PTMEG1000 were mixed in a molar ratio of 1:2.1:0.26 (the amine value of the carbamate mixture of E2 is 49.8 meq/kg) to obtain the condensation type polyurethane resin of E2, whose Mn is 50,000.

**<Example 3 (E3)>**

The preparation of the condensation type polyurethane resin of example 3 is similar to that of example 1, except that PEG1000 is replaced with polybutylene adipate 1000 (PBA1000, purchased from evermore chemical industry Co., Ltd). HMDA, EC, and PBA1000 were mixed in a molar ratio of 1:2.1:0.26 (the amine value of the carbamate mixture of E3 is 48.1 meq/kg) to obtain the condensation type polyurethane resin of E3, whose Mn is 51,000.

**<Example 4 (E4)>**

The preparation of the condensation type polyurethane resin of example 4 is similar to that of Examples 1, except that PEG1000 is replaced with poly-ε-caprolactone 2000 (PCL2000, purchased from Huafon Chemical Co., Ltd). HMDA, EC, and PCL2000 were mixed in a molar ratio of 1:2.1:0.13 (the amine value of the carbamate mixture of E4 is 75.2 meq/kg) to obtain the condensation type polyurethane resin of E4, whose Mn is 49,000.

**<Example 5 (E5)>**

The preparation of the condensation type polyurethane resin of example 5 is similar to that of example 1, except that PEG1000 is replaced with poly(hexamethylene carbonate) diol 1000 (PHC diol 1000, purchased from Tosoh Corporation in Japan, the model number is Nippollan 981). HMDA, EC, and PHC diol 1000 were mixed in a molar ratio of 1:2.1:0.26 (the amine value of the carbamate mixture of E5 is 10.6 meq/kg) to obtain the condensation type polyurethane resin of E5, whose Mn is 101,000.

**<Example 6 (E6)>**

The preparation of the condensation type polyurethane resin of example 6 is similar to that of example 5, except that EC is replaced with dimethyl carbonate (DMC, purchased from Emperor Chemical Co., Ltd.) and PHC diol 1000 is replaced with PTMEG 1000. HMDA, DMC, and PTMEG 1000 were mixed in a molar ratio of 1:10:1 (the amine value of the carbamate mixture of E6 is 55.1 meq/kg). After adding $SnCl_2$, the mixture was refluxed at 85 °C for 16 h, and then the carbamation reaction was carried out to obtain the condensation type polyurethane resin of E6, whose Mn is 44,000.

**<Example 7 (E7)>**

The preparation of the condensation type polyurethane resin of example 7 is similar to that of example 5, except that EC is replaced with diphenyl carbonate (DPC, purchased from Emperor Chemical Co., Ltd.). HMDA, DPC, and PHC diol 1000 were mixed in a molar ratio of 1:4:1 (the amine value of the carbamate mixture of E7 is 15.3 meq/kg) to obtain the condensation type polyurethane resin of E7, whose Mn is 41,000.

**<Example 8 (E8)>**

The preparation of the condensation type polyurethane resin of example 8 is similar to that of example 5, except that EC is replaced with di(diethylene glycol) carbonate (DEGC, purchased from Oriental Union Chemical Corporation). HMDA, DEGC, and PHC diol 1000 were mixed in a molar ratio of 1:4:1 (the amine value of the carbamate mixture of E8 is 32.3 meq/kg) to obtain the condensation type polyurethane resin of E8, whose Mn is 46,000.

**<Example 9 (E9)>**

The preparation of the condensation type polyurethane resin of example 9 is similar to that of example 5, except that HMDA is replaced with m-xylylenediamine (MXDA, purchased from Mitsubishi Chemical Group Corporation). MXDA, EC, and PHC diol 1000 were mixed in a molar ratio of 1:2.1:0.26 (the amine value of the carbamate mixture of E9 is 49.6 meq/kg) to obtain the condensation type polyurethane resin of E9, whose Mn is 81,000.

**<Example 10 (E10)>**

The preparation of the condensation type polyurethane resin of example 10 is similar to that of example 5, except that HMDA is replaced with 1,3-cyclohexanedimethanamine (1,3-BAC, purchased from Mitsubishi Chemical Group Corporation). 1,3-BAC, EC, and PHC diol 1000 were mixed in a molar ratio of 1:2.1:0.26 (the amine value of the carbamate mixture of E10 is 50.9 meq/kg) to obtain the condensation type polyurethane resin of E10, whose Mn is 94,000.

**<Example 11 (E11)>**

The preparation of the condensation type polyurethane resin of example 11 is similar to that of example 5, except that HMDA is replaced with 1,10-diaminodecane (DMDA, purchased from Mitsubishi Chemical Group Corporation). DMDA, EC, and PHC diol 1000 were mixed in a molar ratio of 1:2.1:0.26 (the amine value of the carbamate mixture of E11 is 25.1 meq/kg) to obtain the condensation type polyurethane resin of E11, whose Mn is 76,000.

**<Example 12 (E12)>**

The preparation of the condensation type polyurethane resin of example 12 is similar to that of example 1, except that PEG1000 is replaced with PEG2000 (purchased from Oriental Union Chemical Corporation). HMDA, EC, and PEG2000 were mixed in a molar ratio of 1:2.1:0.26 (the amine value of the carbamate mixture of E12 is 11.2 meq/kg) to obtain the condensation type polyurethane resin of E12, whose Mn is 89,300.

**<Example 13 (E13)>**

The preparation of the condensation type polyurethane resin of example 13 is similar to that of example 12, except that PEG2000 is replaced with PEG2000 and PTMEG1000 (purchased from Formosa Asahi Spandex Co., Ltd). HMDA, EC, PEG2000, PTMEG1000 were mixed in a molar ratio of 1:2.1:0.13:0.13 (the amine value of the carbamate mixture of E13 is 12.1 meq/kg) to obtain the condensation type polyurethane resin of E13, whose Mn is 83,000.

**<Example 14 (E14)>**

The preparation of the condensation type polyurethane resin of example 14 is similar to that of example 12, except that PEG2000 is replaced with PEG2000 and 1,2-propanediol (purchased from Emperor Chemical Co., Ltd.). HMDA, EC, 1,2-propanediol, PEG2000 were mixed in a molar ratio of 1:2.1:0.13:0.13 (the amine value of the carbamate mixture of E14 is 12.1 meq/kg) to obtain the condensation type polyurethane resin of E14, whose Mn is 35,000.

**<Example 15 (E15)>**

The preparation of the condensation type polyurethane resin of example 15 is similar to that of example 12, except that PEG2000 is replaced with PEG2000 and neopentyl glycol (purchased from Emperor Chemical Co., Ltd.). HMDA, EC, neopentyl glycol, PEG2000 were mixed in a molar ratio of 1:2.1:0.13:0.13 (the amine value of the carbamate mixture of E15 is 12.1 meq/kg) to obtain the condensation type polyurethane resin of E15, whose Mn is 124,000.

**<Example 16 (E16)>**

The preparation of the condensation type polyurethane resin of example 16 is similar to that of example 12, except that PEG2000 is replaced with PEG2000 and PPG1000 (purchased from Oriental Union Chemical Corporation). HMDA, EC, PPG1000, PEG2000 were mixed in a molar ratio of 1:2.1:0.13:0.13 (the amine value of the carbamate mixture of E16 is 12.1 meq/kg) to obtain the condensation type polyurethane resin of E16, whose Mn is 37,000.

**<Example 17 (E17)>**

The preparation of the condensation type polyurethane resin of example 17 is similar to that of example 12, except that PEG2000 is replaced with PEG2000 and BHET (purchased from ShuYe Environmental Technology Co., LTD). HMDA, EC, BHET, PEG2000 were mixed in a molar ratio of 1:2.1:0.13:0.13 (the amine value of the carbamate mixture of E17 is 12.1 meq/kg) to obtain the condensation type polyurethane resin of E17, whose Mn is 131,000.

**<Comparative Example 1 (CE1)>**

The preparation of the condensation type polyurethane resin of comparative example 1 is similar to that of example 1, except that HMDA, EC, and PEG1000 were subjected to the carbamation reaction at 130 °C with stirring for 5 h (the amine value of the carbamation product measured by ASTM D2074 is 375.6 meq/kg). Then, the carbamation reaction was carried out to obtain the condensation type polyurethane resin of CE1, whose Mn is 25,000.

**<Comparative Example 2 (CE2)>**

In a 1 L stainless steel reactor, HMDA and EC were mixed at a molar ratio of 1:2.1, and a carbamation reaction was carried out at 75 °C for 5 h to obtain a carbamate mixture of comparative example 2. The carbamate mixture obtained above was washed, filtered, and recrystallized to obtain an intermediate of bis(2-hydroxyethyl) hexane-1,6-diyldicarbamate (solid) (the amine value of the intermediate was 1.8 meq/kg measured by ASTM D2074). Subsequently, the intermediate was mixed with PEG1000 at a molar ratio of 1:0.26, and the carbamation reaction was carried out in the same preparation steps as in example 1 to obtain a condensation type polyurethane resin of CE2, whose Mn was 210,000.

**<Comparative Example 3 (CE3)>**

The polyurethane resin of comparative example 3 is TPU pellets (model number is ER-80AML) purchased from Coating P. Materials Co., LTD. (prepared by the reaction of PBA and methylene diphenyl diisocyanate (MDI)), and its Mn is 130,000.

**<Comparative Example 4 (CE4)>**

The polyurethane resin of comparative example 4 is TPU pellets (model number is BE-5038E) purchased from Coating P. Materials Co., LTD. (produced by the reaction of PTMEG and MDI), and its Mn is 170,000.

**<Comparative Example 5 (CE5)>**

The polyurethane resin of comparative example 5 is TPU pellets (model number is WHTA9011) purchased from Wanhua Chemical Group Co., Ltd. (obtained by the reaction of PCL and hexamethylene diisocyanate (HMDI)), and its Mn is 200,000.

**<Comparative Example 6 (CE6)>**

The preparation of the condensation type polyurethane resin of comparative example 6 is similar to that of example 6, except that dimethyl hexamethylene dicarbamate, PTMEG1000, and 1,6-hexanediol (HDO, purchased from Emperor Chemical Co., Ltd.) were used. The molar ratio of dimethyl hexamethylene dicarbamate, HDO, and PTMEG1000 was 1:0.6:0.4, and the carbamation reaction was carried out at 100 °C and a pressure of less than 600 torr for 2 h. Then, the carbamation reaction was carried out at 260 °C and a pressure of less than 150 torr for 4 h to obtain a condensation type polyurethane resin of comparative example 6, whose Mn is 116,000.

**[Condensation type polyurethane fiber]**

The spinning used USTER® Tensorapid spinning machine. The polyurethane resins of examples 1 to 17 and comparative examples 1 to 6 were melt-extruded by a screw extruder, accurately metered by a metering pump, fed into a spinning element, and ejected through a spinneret plate to form a filament tow. The filament tow was then cooled, bundled, stretched, and then wound to obtain the polyurethane elastic fibers. The melt temperature of the screw extruder was 150 °C, and the spinning speed was 200 m/min. The die swell ratio and fiber denier in the spinning process can be found in table 1.

**[Measurement of amine value]**

The amine values of the condensation type polyurethane resins, polyurethane resins, carbamate mixtures, and intermediates of examples 1 to 17 and comparative examples 1 to 6 were measured using ASTM D2074. The results are shown in table 1 below.

**[Molecular weight of polyurethane]**

The number average molecular weight (Mn) of the condensation type polyurethane resins of examples 1 to 17 and comparative examples 1 to 6 were measured by ASTM D3536. The results are shown in table 1 below.

**[Urea bond content of condensation type polyurethane resin]**

The nuclear magnetic resonance spectrum of the polyurethane resins of examples 1 to 17 and comparative examples 1 to 6 were measured by $^1H$ NMR (DMSO-$d_6$), and the integrated area (A1) with a chemical shift ($\delta$) between 5.6 ppm and 5.8 ppm and the integrated area (A2) with a chemical shift between 6.7 ppm and 7.3 ppm were calculated. The urea segment content (mol%) of the polyurethane resin was defined as $[A1/(A1+A2)]\times100\%$. The results are shown in table 1.

**[Spinning process die swell ratio]**

The die swell ratio is defined as: the diameter after flowing out of the spinneret hole (D, extrudate)/the diameter of the spinneret hole (D, die).

**[Coefficient of variation of fiber]**

The coefficient of variation (CV) measures the uniformity of fiber thickness. The formula is $CV=\frac{\text{standard deviation }(\sigma)}{\text{average value }(\mu)}\times 100$, in which the standard deviation ($\sigma$) is the statistical dispersion of the fiber denier, and the average value ($\mu$) is the average denier of the fiber. Ten fibers were taken and their average deniers were calculated.

[Table 1]

| | Amine value of polyurethane resin (meq/kg) | Urea content (%) | Spinning process die swell ratio | Coefficient of variation of fiber CV | Fiber denier (Denier) |
|---|---|---|---|---|---|
| E1 | 31.3 | 29.7 | 1.1 | 1.9 | 151 |
| E2 | 22.4 | 23.5 | 1.2 | 2.6 | 110 |
| E3 | 28.8 | 26.3 | 1.1 | 1.3 | 211 |
| E4 | 26.9 | 25.1 | 1.1 | 3.4 | 105 |
| E5 | 14.6 | 18.5 | 1.2 | 4.2 | 21 |
| E6 | 22.9 | 23.7 | 1.1 | 3.2 | 106 |
| E7 | 18.5 | 20.6 | 1.3 | 4.9 | 99 |
| E8 | 19.7 | 21.3 | 1.2 | 3.7 | 89 |
| E9 | 12.4 | 16.4 | 1.4 | 5.1 | 74 |
| E10 | 10.6 | 7.9 | 1.4 | 5.2 | 71 |
| E11 | 15.6 | 19.2 | 1.5 | 5.3 | 74 |
| E12 | 11.2 | 10.1 | 1.4 | 5.2 | 72 |
| E13 | 12.1 | 8.7 | 1.4 | 5.1 | 101 |
| E14 | 23.8 | 24.3 | 1.1 | 3.5 | 104 |
| E15 | 22.4 | 23.1 | 1.2 | 3.6 | 103 |
| E16 | 12.6 | 19.5 | 1.4 | 5.4 | 79 |
| E17 | 21.5 | 22.9 | 1.1 | 3.7 | 101 |
| CE1 | 45.2 | 32.1 | 1.0 | 6.2 | 73 |
| CE2 | 6.4 | 5.6 | 2.2 | 7.9 | 104 |
| CE3 | 5.3 | 1.3 | 2.0 | 6.8 | 114 |
| CE4 | 6.5 | 2.4 | 2.1 | 7.3 | 128 |
| CE5 | 5.3 | 1.7 | 2.2 | 7.6 | 107 |
| CE6 | 8.6 | 4.5 | 1.9 | 6.6 | 93 |

As shown in Table 1, the amine value of the condensation type polyurethane resins of examples 1 to 17 is between 10.6 meq/kg and 31.3 meq/kg, and they have appropriate hydrogen bond cohesion. The die swell ratio during spinning is controlled at 1.1 to 1.5, and the coefficient of variation of the obtained fibers are less than 6. The amine value of the resin of comparative example 1 is 45.2 meq/kg, and the die swell ratio during spinning is 1, which causes necking and easy fiber breakage, and the coefficient of variation of the spun fibers is greater than 6. The amine value of the resin of comparative example 2 is 5.6 meq/kg, and its die swell ratio during spinning is 2.2. In addition, comparative examples 3 to 5 are polyurethanes made from isocyanate. Since the isocyanate reacts rapidly, its amine value is relatively low, merely 5.3 meq/kg to 6.5 meq/kg. The amine value of the polyurethanes in comparative examples 2 and 3 to 5 are all less than 10 meq/kg, the die swell ratio are greater than 1.7, resulting in poor spinning stability, and the coefficient of variation of the fibers are greater than 6. It can be seen that the amine value of the polyurethane resin affects the die swell ratio during spinning, and then affects the coefficient of variation of the fiber after spinning.

The above comparative example 2 is similar to CN104513393B. As can be seen from table 2, the amine value of the purified condensation type polyurethane resin of comparative example 2 is lower than that of example 2, which is only 6.4 meq/kg. Specifically, since comparative example 2 was purified by recrystallization to remove impurities, the intermediate after purification was only dicarbamate, while example 2 of this case was not purified and the intermediate product was directly polymerized in the next step. Therefore, the intermediate of example 2 of this case was carbamate mixtures including the dicarbamate and the amino carbamate, which is different from the reactants in the carbamation reaction of comparative example 2. After polymerization, the amine value of the product of comparative example 2 is too low, which affects the spinning die swell ratio, and the coefficient of variation of the obtained fiber is 7.9 (poor). The differences in the condensation type polyurethane resin processes of comparative example 2 and example 2 are shown in table 2.

[Table 2]

| | Amine value of polyurethane resin (meq/kg) | Spinning process die swell ratio | Coefficient of variation of fiber CV | Fiber denier (Denier) |
|---|---|---|---|---|
| E2 | 22.4 | 1.2 | 2.6 | 110 |
| CE2 | 6.4 | 2.2 | 7.9 | 104 |

The above comparative example 6 is similar to CN112853531A. As can be seen from table 3, the amine value of the condensation type polyurethane resin of comparative example 6 is lower than that of example 6, which is only 8.6 meq/kg (the amine value is too low), and the coefficient of variation of the fiber is 6.6 (greater). Specifically, since comparative example 6 adds a chain extender (1,6-hexanediol) to increase its molecular weight, its amine value is too low, the die swell ratio is 1.9, and the coefficient of variation of the obtained fiber is 6.6 (poor).

Table 3

| | Amine value of polyurethane resin (meq/kg) | Spinning process die swell ratio | Coefficient of variation of fiber CV | Fiber denier (Denier) |
|---|---|---|---|---|
| E6 | 22.9 | 1.1 | 3.2 | 106 |
| CE6 | 8.6 | 1.9 | 6.6 | 93 |

In summary, the condensation type polyurethane resin of the present invention has an amine value of not less than 10 meq/kg and can be melt-spun smoothly, and the coefficient of variation of the obtained polyurethane fiber is not greater than 6. Therefore, the purpose of the present invention can be achieved.

## Claims

1. A condensation type polyurethane fiber **characterized by** comprising a condensation type polyurethane resin, and the condensation type polyurethane resin comprising:

   a plurality of first segments having a structure as shown in formula (1):

   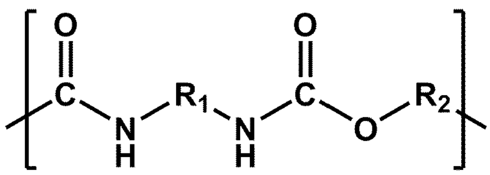
   formula (1);

   and
   a plurality of terminal groups bonded to $R_2$ of at least one of the first segments, and the terminal groups having a structure as shown in formula (2):

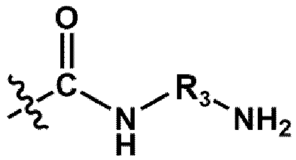 formula (2);

wherein $R_1$ and $R_3$ independently comprise a first organyl group of C2-C20, and the first organyl group comprises a hydrocarbon group or a group having carbon, hydrogen, and oxygen,
wherein the first segments have the same or different $R_2$, $R_2$ independently comprises a second organyl group of C2-C20, the second organyl group comprises a hydrocarbon group or a group having carbon, hydrogen, and oxygen,
wherein the condensation type polyurethane resin has an amine value not less than 10 meq/kg; and
a coefficient of variation of the condensation type polyurethane fiber is not greater than 6.

**2.** The condensation type polyurethane fiber of claim 1, **characterized in that** $R_1$ and $R_3$ independently comprise

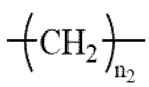 , 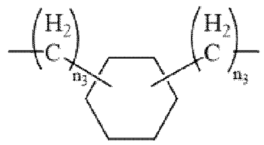 ,

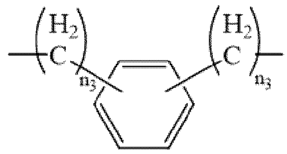 ,

or combinations thereof, wherein each $n_2$ is 2-10, and each $n_3$ is 1-10.

**3.** The condensation type polyurethane fiber according to any one of claims 1-2, **characterized in that** $R_2$ is selected from

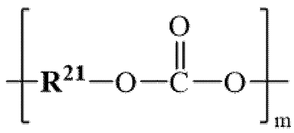 ,

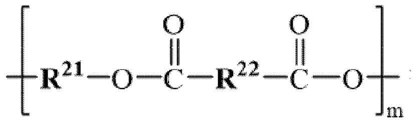 ,

or combinations thereof, wherein $R^{21}$ and $R^{22}$ are each independently a C2 to C20 hydrocarbon group, and each m is 1-250.

**4.** The condensation type polyurethane fiber according to any one of claims 1-3, **characterized in that** $R_2$ is selected from

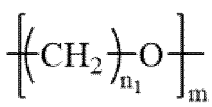 ,

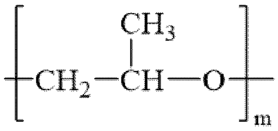 , 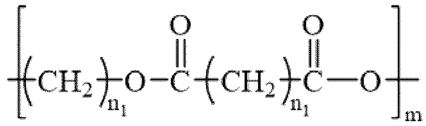 , 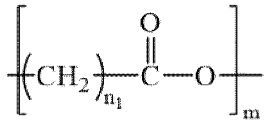 ,

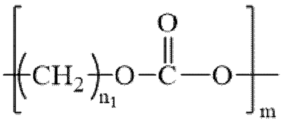 , 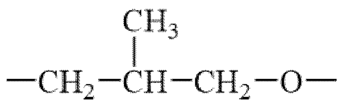 , 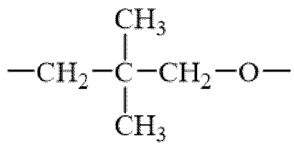 ,

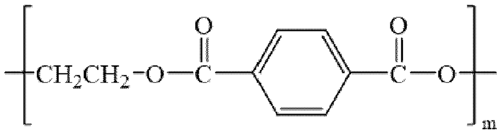 ,

or combinations thereof, wherein each $n_1$ is 2-20, and each m is 1-250.

**5.** The condensation type polyurethane fiber according to any one of claims 1-4, **characterized in that** an amine value of the condensation type polyurethane fiber ranges from 10 meq/kg to 45 meq/kg.

**6.** The condensation type polyurethane fiber according to any one of claims 1-5, **characterized in that** an amine value of the condensation type polyurethane fiber ranges from 20 meq/kg to 45 meq/kg.

**7.** The condensation type polyurethane fiber according to any one of claims 1-6, **characterized in that** the condensation type polyurethane resin further comprises an urea bond group-containing compound, and when an amount of the condensation type polyurethane resin is 100 mol%, a content of the urea bond group-containing compound is not greater than 30 mol%.

**8.** The condensation type polyurethane fiber according to any one of claims 1-7, **characterized in that** the coefficient of variation of the condensation type polyurethane fiber is 2-6.

Europäisches Patentamt
European Patent Office
Office européen des brevets

# EUROPEAN SEARCH REPORT

Application Number
EP 25 18 5997

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | SHEN ZIYUN ET AL: "A comparison of non-isocyanate and HDI-based poly(ether urethane): Structure and properties", POLYMER, vol. 175, 1 June 2019 (2019-06-01), pages 186-194, XP093326623, AMSTERDAM, NL ISSN: 0032-3861, DOI: 10.1016/j.polymer.2019.05.010 * pages 187-191, points 2.1 Materials and 2.2 Synthesis of NIPU, tables 1-3, ex. NIPU30 and NIPU40, schemes 1 and 2, Fig. 1 and 2, ex. NIPU30 and NIPU40; page 193, conclusion part * | 1-8 | INV. C08G71/02 C07D317/36 C07D317/38 C08G71/04 C08L75/02 C08L75/04 C08L75/06 C08L75/08 D01F6/70 D04H1/4358 |
| Y | CN 112 011 049 A (INST CHEMISTRY CAS) 1 December 2020 (2020-12-01) * pages 10-13, par, 0045-46, ex. 1, 2, 4, 5, claim 9 * | 1-8 | |
| X | US 2012/295506 A1 (PARDINI STEVEN P [US]) 22 November 2012 (2012-11-22) | 1-8 | TECHNICAL FIELDS SEARCHED (IPC) |
| Y | * claims 1-3, 6, 10, 14; par. 0022-23, 0029 * | 1-8 | C08G C07D D04H D01F C08L |

The present search report has been drawn up for all claims

1

| Place of search | Date of completion of the search | Examiner |
|---|---|---|
| Munich | 23 October 2025 | Stefaniu, Cristina |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................................................
& : member of the same patent family, corresponding document

EPO FORM 1503 03.82 (P04C01)

# ANNEX TO THE EUROPEAN SEARCH REPORT ON EUROPEAN PATENT APPLICATION NO. EP 25 18 5997

This annex lists the patent family members relating to the patent documents cited in the above-mentioned European search report.
The members are as contained in the European Patent Office EDP file on
The European Patent Office is in no way liable for these particulars which are merely given for the purpose of information.

23-10-2025

| Patent document cited in search report | Publication date | Patent family member(s) | Publication date |
|---|---|---|---|
| CN 112011049 A | 01-12-2020 | NONE | |
| US 2012295506 A1 | 22-11-2012 | BR 112012017395 A2 | 29-03-2016 |
| | | CN 102713033 A | 03-10-2012 |
| | | EP 2524072 A2 | 21-11-2012 |
| | | HK 1176385 A1 | 26-07-2013 |
| | | JP 5829218 B2 | 09-12-2015 |
| | | JP 2013517391 A | 16-05-2013 |
| | | KR 20120115518 A | 18-10-2012 |
| | | MX 347436 B | 26-04-2017 |
| | | TW 201136967 A | 01-11-2011 |
| | | US 2012295506 A1 | 22-11-2012 |
| | | WO 2011087943 A2 | 21-07-2011 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- TW 200412352
- US 6916896 B2
- US 20250129522 A1
- US 10875956 B2
- US 20230183423 A1
- CN 101696271 A
- CN 103865059 A
- CN 116355210 A
- CN 112853531 A
- CN 104513393 B